# FASCICULE DE BREVET EUROPEEN

(11) **EP 3 697 548 B1**
(45) Date de publication et mention de la délivrance du brevet: **17.11.2021**
(21) Numéro de dépôt: 18785407.0
(22) Date de dépôt: 17.10.2018
(51) Int. Cl.: B21D 51/44, B29C 65/00, B65D 17/50

(54) **COUVERCLE POUR BOÎTE DE CONSERVE MÉTALLIQUE, COMPRENANT UN ANNEAU MÉTALLIQUE ET MEMBRANE PELABLE THERMOSCELLÉE**
DECKEL FÜR EINE METALLDOSE MIT EINEM METALLRING UND EINER ABZIEHBAREN WÄRMEVERSIEGELTEN MEMBRAN
LID FOR A METAL CAN, COMPRISING A METAL RING AND A PEELABLE, HEAT-SEALED MEMBRANE

(30) Priorité: 20.10.2017 FR 1759923
(43) Date de publication de la demande: 26.08.2020
(73) Titulaire: Trivium Packaging Group Netherlands B.V., 7418 AH Deventer (NL)
(72) Inventeur: LE TALLUDEC, Alain, 49430 Durtal (FR); DELTOUR, Bernard, 72200 Crosmieres (FR)
(74) Mandataire: Jacobacci Coralis Harle
(86) Numéro de dépôt international: PCT/EP2018/078457
(87) Numéro de publication internationale: WO 2019/077004

(56) Documents cités:
- EP-A1- 0 221 842
- EP-A1- 2 019 045
- EP-A2- 0 408 268
- EP-A2- 1 595 808
- US-A- 4 544 080
- US-A1- 2005 145 630

## Description

### DOMAINE TECHNIQUE AUQUEL SE RAPPORTE L'INVENTION

La présente invention concerne, de manière générale, le domaine des couvercles adaptés à la fermeture des boîtes de conserve métalliques. Elle concerne plus particulièrement les couvercles comprenant un anneau métallique sur lequel une membrane pelable est thermoscellée.

### ARRIERE-PLAN TECHNOLOGIQUE

Les boîtes de conserve métalliques sont couramment utilisées pour le conditionnement de denrées alimentaires. De telles boîtes de conserve peuvent aussi être utilisées pour le conditionnement d'autres produits industriels, comme par exemple des peintures.

Certaines boîtes de conserve comprennent un couvercle formé d'un anneau métallique sur lequel une membrane pelable est scellée par thermoscellage. Une telle structure de couvercle permet une ouverture facilitée, directement à la main, cela sans nécessiter un outil ou un accessoire.

Pour cela, l'anneau métallique comprend généralement deux parties concentriques :
- une partie annulaire extérieure, adaptée à être solidarisée sur une bordure de la paroi latérale d'un corps de boîte, et
- une partie annulaire intérieure, sur laquelle la membrane pelable est scellée par thermoscellage.

Le bord libre de la partie annulaire intérieure est souvent très tranchant, avec un risque significatif de coupure pour l'utilisateur manipulant la boîte de conserve.

Pour protéger et escamoter ce bord libre, la bordure annulaire intérieure de cette partie annulaire intérieure est classiquement conformée en une boucle appelée « roulé ». Ce roulé est généralement réalisé par un enroulement de la matière sur elle-même, vers l'extérieur de la boite ; et il est orienté du côté de la face annulaire inférieure de la partie annulaire intérieure, côté intérieur de la boîte de conserve. Un tel roulé est par exemple décrit dans le document US-4 544 080 qui divulgue un couvercle selon le préambule de la revendication 1.

Mais, en pratique, cette solution génère un nouvel inconvénient : le procédé de fabrication de l'anneau métallique génère un bord libre de roulé dont le métal n'est pas protégé ; ce bord libre alors susceptible d'interagir chimiquement avec le contenu de la boîte de conserve, avec des phénomènes éventuels de corrosion et/ou sulfuration susceptibles de contaminer ce contenu et de rendre l'aspect visuel inacceptable par cette contamination avec un dépôt foncé sur l'anneau et/ou sur le produit.

Compte tenu de ce qui précède, il existe un besoin d'une solution adaptée à protéger le bord libre du roulé de sorte à éviter les phénomènes de réactions chimiques susceptibles de survenir au niveau de ce bord libre de roulé.

### OBJET DE L'INVENTION

Afin de remédier à l'inconvénient précité de l'état de la technique, la présente invention propose une nouvelle structure de couvercle dont le bord libre du roulé est protégé à l'égard des interactions chimiques avec le contenu de la boîte de conserve (évitant ainsi les problèmes de corrosion et/ou sulfuration).

Plus particulièrement, on propose selon l'invention un couvercle adapté à la fermeture d'une boîte de conserve métallique, lequel couvercle comprend un anneau métallique sur lequel une membrane pelable est scellée.

Cet anneau métallique comprend :
- une partie annulaire extérieure adaptée à être solidarisée sur une bordure de la paroi latérale d'un corps de boîte, et
- une partie annulaire intérieure, sur laquelle ladite membrane pelable est scellée,

laquelle partie annulaire intérieure comporte une partie couronne prolongée par un roulé délimitant une lumière centrale,
laquelle partie couronne comporte :

- une face annulaire supérieure sur laquelle ladite membrane pelable est scellée par le biais d'une bande de scellage réalisée dans un matériau de thermoscellage, et
- une face annulaire inférieure, opposée à ladite face annulaire supérieure,

lequel roulé est formé du côté de la face annulaire inférieure de ladite partie couronne, et comporte une surface extérieure et une surface intérieure s'étendant dans le prolongement des faces annulaires supérieure et inférieure de ladite partie couronne, et un bord libre ménagé au sein dudit roulé,
laquelle surface extérieure dudit roulé comporte une première portion de liaison qui est ménagée en regard et à proximité d'une seconde portion de liaison de la partie annulaire intérieure, délimitant entre elles un espace annulaire.

Et selon l'invention, la surface extérieure et la surface intérieure dudit roulé sont recouvertes par un matériau de thermoscellage,
et ladite première portion de liaison et ladite seconde portion de liaison sont scellées l'une avec l'autre par le biais dudit matériau de thermoscellage, pour former un joint d'étanchéité obturant ledit espace annulaire.

Le roulé est ainsi rendu étanche grâce au joint d'étanchéité qui obture l'espace annulaire.

Ce joint d'étanchéité empêche ainsi les interactions entre le bord libre de ce roulé (non recouvert par un revêtement), et le contenu de la boîte de conserve.

Cette solution est ainsi particulièrement efficace pour éviter les réactions chimiques entre le bord libre du roulé et l'environnement (en particulier le contenu de la boîte de conserve).

Un tel couvercle a en plus l'intérêt de permettre l'utilisation d'un anneau métallique dont le revêtement est réalisé sur métal à plat, et dont le roulé peut être réalisé par enroulement dans les deux sens (« intérieur » ou « extérieur »).

D'autres caractéristiques non limitatives et avantageuses du couvercle conforme à l'invention, prises individuellement ou selon toutes les combinaisons techniquement possibles, sont les suivantes :
- la face annulaire supérieure et la face annulaire inférieure de la partie couronne, ainsi que la surface extérieure et la surface intérieure du roulé sont recouvertes par ledit matériau de thermoscellage,
- selon un premier mode de réalisation, le roulé est formé par un enroulement dit « intérieur », de sorte que ladite première portion de liaison dudit roulé soit en regard de ladite seconde portion de liaison de ladite partie annulaire intérieure qui est ménagée dans le prolongement de ladite face annulaire inférieure de la partie couronne,
- le matériau de thermoscellage est choisi parmi le polypropylène et le polyéthylène (par exemple sous la forme d'un vernis thermoscellant qui est avantageusement constitué d'une matrice polymère et d'une dispersion de polypropylène).

Dans une variante de réalisation, le roulé est formé par un enroulement dit « intérieur », de sorte que ladite première portion de liaison dudit roulé soit en regard de ladite seconde portion de liaison de ladite partie annulaire intérieure qui est ménagée dans le prolongement de ladite face annulaire inférieure de la partie couronne.

Dans une variante de réalisation, le roulé est formé par un enroulement dit « extérieur », de sorte que ladite première portion de liaison dudit roulé soit en regard de ladite seconde portion de liaison de ladite partie annulaire intérieure qui est ménagée dans le prolongement de ladite face annulaire supérieure de la partie couronne.

L'invention propose également une boîte de conserve métallique comprenant :
- un corps de boîte comportant une paroi latérale terminée par une bordure, et
- un couvercle selon l'invention, serti sur ladite bordure de ladite paroi latérale.

L'invention propose encore un procédé pour la fabrication d'un couvercle selon l'invention.

Ce procédé comprend successivement :
- une étape de fourniture d'un anneau métallique selon l'invention, dont l'espace annulaire est au moins partiellement rempli par un matériau de thermoscellage et dans lequel la première portion de liaison de surface extérieure dudit roulé et la seconde portion de liaison en regard de la partie annulaire intérieure ne sont pas scellées l'une avec l'autre par le biais dudit matériau de thermoscellage, et
- une étape de chauffage au cours de laquelle, d'une part, la membrane pelable est thermoscellée sur ledit anneau métallique par le biais de la bande de scellage et, d'autre part, la première portion de liaison du roulé est scellée avec la seconde portion de liaison en regard de la partie annulaire intérieure par le biais du joint d'étanchéité.

D'autres caractéristiques non limitatives et avantageuses du procédé conforme à l'invention, prises individuellement ou selon toutes les combinaisons techniquement possibles, sont les suivantes :
- l'étape de fourniture de l'anneau métallique comprend, préalablement à une opération de formation du roulé, une opération de revêtement au cours de laquelle le matériau de thermoscellage est déposé sur les deux faces annulaires de la partie couronne ; l'opération de revêtement est effectuée au moyen d'un vernis thermoscellant ou à partir d'un métal pré-revêtu d'un film thermoscellant ;
- au cours de l'étape de chauffage, le chauffage est réalisé depuis une surface supérieure de la membrane pelable pour générer la bande de scellage et le joint d'étanchéité, avantageusement par le biais d'un phénomène de conduction ou d'induction thermique ; l'étape de chauffage est avantageusement mise en oeuvre par le biais d'un outil de thermoscellage comprenant un mors supérieur chauffant, venant appuyer et chauffer en regard la face annulaire supérieure, y compris sur une zone annulaire en regard du roulé, pour générer la bande de scellage et le joint d'étanchéité ;
- au cours de l'étape de chauffage, une force d'appui est exercée sur une portion inférieure du roulé de sorte à plaquer l'une contre l'autre la première portion de liaison dudit roulé et la seconde portion de liaison de la partie annulaire intérieure en regard ; cette étape de chauffage est avantageusement mise en oeuvre par le biais d'un outil de thermoscellage (par exemple par induction) comprenant un organe inférieur d'appui, venant exercer une force d'appui contre une portion inférieure du roulé et dirigée vers la partie annulaire intérieure.

### DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 représente, schématiquement et en section, une première forme de réalisation d'un couvercle selon l'invention qui comprend un anneau métallique sur lequel une membrane pelable est scellée ;
- les figures 2 et 3 sont des vues partielles et agrandies du couvercle selon la figure 1, montrant en détails les scellages ménagés, d'une part, entre l'anneau métallique et la membrane pelable et, d'autre part, au sein même de l'anneau métallique, entre le roulé et la partie annulaire intérieure ;

- la figure 4 (composée des figures 4A à 4G) montre les principales opérations pour la fabrication de l'anneau métallique lors de l'étape de fourniture du couvercle selon les figures 1 à 3 ;
- la figure 5 (composée des figures 5A et 5B) représente l'étape de chauffage au cours de laquelle, d'une part, la membrane pelable est thermoscellée sur l'anneau métallique et, d'autre part, le joint d'étanchéité est formé simultanément au sein de l'espace annulaire délimité entre le roulé et la partie annulaire intérieure de l'anneau métallique, pour l'obtention du couvercle selon les figures 1 à 3 ;
- la figure 6 représente, schématiquement et en section, une seconde forme de réalisation d'un couvercle selon l'invention dont l'enroulement est du type extérieur.

### Couvercle et boîte de conserve métallique

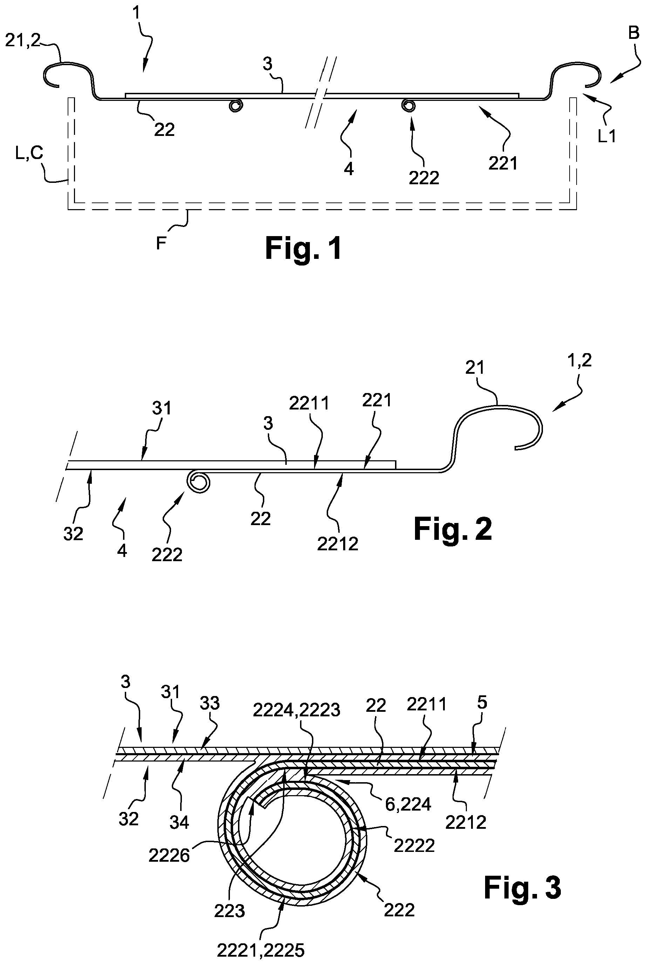

Les figures 1 à 3 présentent un couvercle 1 qui est adapté à être rapporté sur un corps de boîte C pour former une boîte de conserve métallique B (par exemple une boîte de conserve dite « deux pièces »).

Un corps de boîte C est représenté schématiquement, en traits discontinus, sur la figure 1.

Ce corps de boîte C consiste avantageusement en un corps métallique monobloc, comprenant une paroi latérale L et un fond F.

De manière générale, le couvercle 1 selon l'invention comprend un anneau métallique 2 sur lequel une membrane pelable 3 est scellée.

### Membrane pelable

La membrane pelable 3 est avantageusement choisie parmi les membranes pelables 3 classiques en soi.

Cette membrane pelable 3 présente deux surfaces opposées :
- une surface supérieure 31, destinée à être orientée vers l'extérieur de la boîte de conserve B,
- une surface inférieure 32, destinée à être orientée vers l'intérieur de la boîte de conserve B et conçue pour être scellée sur l'anneau métallique 2.

De manière traditionnelle, la membrane pelable 3 comprend plusieurs couches (figure 3) :
- une couche de base 33, appelée encore « couche barrière », supérieure, constituée d'un matériau résistant et flexible, par exemple de l'aluminium, et
- une couche de scellage 34, inférieure, adaptée en particulier pour assurer le scellage avec l'anneau métallique 2.

La couche de scellage 34 peut être composée de différentes sous-couches (non représentées), à savoir :
- une sous-couche adhésive, constituée par exemple de polypropylène greffé à l'anhydride maléique et ayant une épaisseur de 2 à 15 micromètres,
- une sous-couche de pelage, constituée par exemple d'un mélange de polyéthylène et de polypropylène, ayant une épaisseur de 15 à 80 micromètres, et
- une sous-couche de scellage externe, constituée par exemple de polypropylène ayant une épaisseur de 2 à 15 micromètres.

Pour faciliter son pelage, cette membrane pelable 3 peut comporter encore une patte de préhension ou de traction (non représentée), destinée à faciliter la séparation de la membrane pelable 3 par rapport à l'anneau métallique 2 par le consommateur.

### Anneau métallique

L'anneau métallique 2 est quant à lui réalisé par exemple en acier ou en aluminium. Cet anneau métallique 2 comprend deux principales parties concentriques :
- une partie annulaire extérieure 21, adaptée à être solidarisée sur une bordure libre L1 de la paroi latérale L du corps de boîte C, par exemple par sertissage, et
- une partie annulaire intérieure 22, sur laquelle la membrane pelable 3 est scellée par thermoscellage.

La partie annulaire intérieure 22 est décrite plus en détails ci-dessous en relation avec les figures 2 et 3.

Cette partie annulaire intérieure 22 comporte une partie couronne 221 prolongée par un roulé 222 délimitant une lumière centrale 4 obturée par la membrane pelable 3 rapportée.

La partie couronne 221 comporte :
- une face annulaire supérieure 2211, destinée à être orientée vers l'extérieur de la boîte de conserve et sur laquelle la membrane pelable 3 est scellée, et
- une face annulaire inférieure 2212, destinée à être orientée vers l'intérieur de la boîte de conserve et opposée à la face annulaire supérieure 2211.

Le roulé 222 est formé du côté de la face annulaire inférieure 2212 de la partie couronne 221 de la partie annulaire intérieure 22.

Par « du côté de la face annulaire inférieure 2212 », on entend avantageusement un roulé 222 ménagé du même côté que la face annulaire inférieure 2212, tenant compte d'un plan général passant par la partie couronne 221.

Ce roulé 222 a avantageusement la forme générale d'une spirale, formée sur au moins un tour ou spire (par exemple entre 1 et 1,5 tour / spire); il est ici formé par un enroulement dit « intérieur », c'est-à-dire orienté vers l'intérieur de la boite de conserve (tenant compte d'un plan général passant par la partie couronne 221).

Le roulé 222 comporte encore deux surfaces opposées :
- une surface extérieure 2221, s'étendant dans le prolongement de la face annulaire supérieure 2211 de la partie couronne 221 de la partie annulaire intérieure 22,
- une surface intérieure 2222, s'étendant dans le prolongement de la face annulaire inférieure 2212 de la partie couronne 221 de la partie annulaire intérieure 22.

La surface extérieure 2221 du roulé 222 comporte une première portion de liaison 2223 qui est ménagée en regard et à proximité d'une seconde portion de liaison 223 de la partie annulaire intérieure 22, délimitant entre elles un espace annulaire 224.

La seconde portion de liaison 223 en question de la partie annulaire intérieure 22 est en l'occurrence formée par une bande intérieure de la face annulaire inférieure 2212 de la partie couronne 221.

L'espace annulaire 224 présente par exemple une épaisseur comprise entre 1 et 100 µm.

Le roulé 222 comporte également :
- une portion supérieure 2224, ménagée en regard de la face annulaire 2212 de la partie annulaire intérieure 22, au niveau de laquelle est ménagée ici ledit espace annulaire 224, formant ici la première portion de liaison 2223,
- une portion inférieure 2225 diamétralement opposée à ladite portion supérieure 2224, et
- un bord libre 2226, ménagé en son intérieur, au sein du roulé 222.

### Matériau de thermoscellage

Un matériau de thermoscellage est ici réparti sur les deux faces annulaires 2211, 2212 de la partie couronne 221 de la partie annulaire intérieure 22, ainsi que sur les surfaces extérieure 2221 et intérieure 2222 du roulé 222 (ce matériau de thermoscellage est représenté très schématiquement sur la figure 3).

Par « matériau de thermoscellage », on entend un matériau apte à être activé pour assurer une fonction de scellage (ou collage) lorsqu'il est soumis à un chauffage (par exemple un chauffage local par conduction ou induction).

Ce matériau de thermoscellage est par exemple choisi parmi le polypropylène ou le polyéthylène (par exemple sous la forme d'un vernis thermoscellant qui est avantageusement constitué d'une matrice polymère et d'une dispersion de polypropylène).

En l'espèce, ce matériau de thermoscellage recouvre au moins une partie des deux faces annulaires 2211, 2212 de la partie couronne 221 de la partie annulaire intérieure 22 et les surfaces extérieure 2221 et intérieure 2222 du roulé 222.

Ce matériau de thermoscellage forme ainsi deux zones de scellage (ou autrement dit « zones de collage ») :
- une première zone de scellage 5 forme une bande de scellage 5 ménagée entre la face annulaire supérieure 2211 de la partie couronne 221 de la partie annulaire intérieure 22 et la surface inférieure 32 de la membrane pelable 3, et
- une seconde zone de scellage 6 forme un joint d'étanchéité 6 ménagé entre la première portion de liaison 2223 de la surface extérieure 2221 du roulé 222 et la seconde portion de liaison 223 en regard de la partie annulaire intérieure 22, pour obturer l'espace annulaire 224.

Le joint d'étanchéité 6, formé par le matériau thermoscellant, s'étend de manière continue (et sur toute la circonférence) entre la première portion de liaison 2223 du roulé 222 et la seconde portion de liaison 223 en regard de la partie annulaire intérieure 22.

Ce joint d'étanchéité 6 empêche ainsi les échanges entre l'intérieur du roulé 222 (où se trouve son bord libre 2226) et l'environnement ambiant, au travers de l'espace annulaire 224.

En particulier, ce joint d'étanchéité 6 est destiné à empêcher l'entrée du produit conditionné dans le roulé 222, de sorte à éviter les réactions chimiques de son bord libre 2226 avec ce produit conditionné (par exemple corrosion et/ou sulfuration).

Par ailleurs, le matériau thermoscellant peut encore recouvrir tout, ou partie, de l'anneau métallique 2 en dehors des zones de scellage 5, 6, à savoir notamment la face annulaire inférieure 2212 de la partie couronne 221 de la partie annulaire intérieure 22.

### Boîte de conserve

Une fois préparé, le couvercle 1 peut être fixé sur la paroi latérale L du corps de boîte C, après le remplissage de ce corps de boîte C (par exemple avec des denrées alimentaires).

Cette fixation peut être effectuée par le biais d'une opération de sertissage traditionnelle entre la partie annulaire extérieure 21 de l'anneau métallique 2 et la bordure libre L1 de la paroi latérale L du corps de boîte C.

On obtient ainsi une boîte de conserve métallique B, fermée, qui comprend :
- un corps de boîte C comportant une paroi latérale L terminée par une bordure L1, et
- le couvercle 1, serti sur la bordure L1 de cette paroi latérale L.

### Procédé de fabrication du couvercle

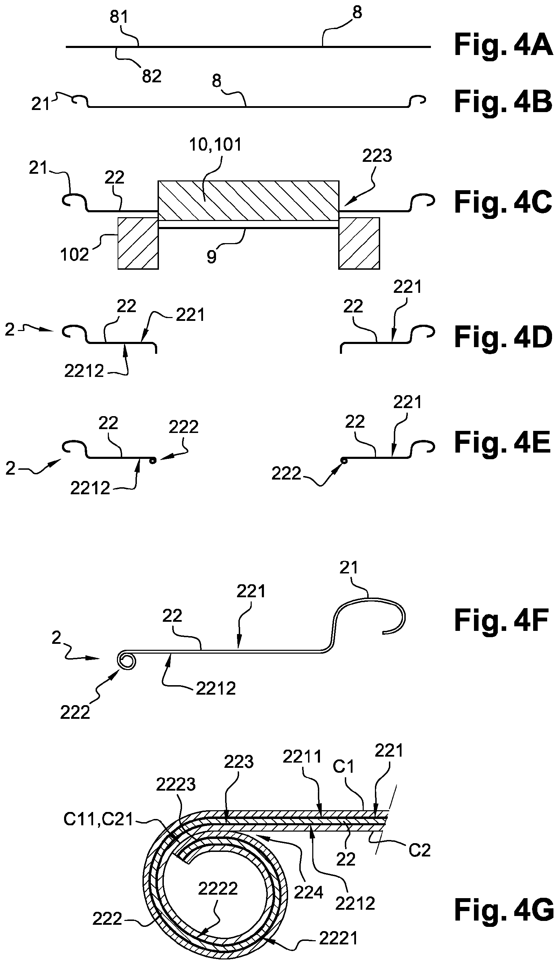

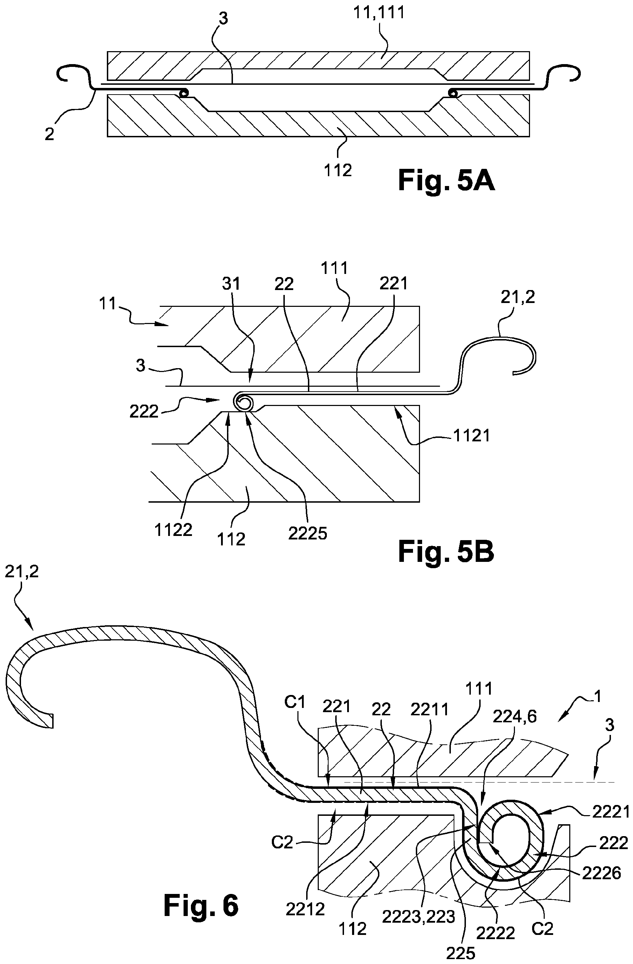

Le couvercle 1 selon l'invention peut être obtenu par le biais d'un procédé de fabrication tel que décrit ci-dessous en relation avec les figures 4 et 5.

De manière générale, ce procédé comprend deux étapes successives :
- une étape de fourniture de l'anneau métallique 2, dont l'espace annulaire 224 est au moins partiellement rempli par le matériau de thermoscellage et dans lequel la première portion de liaison 2223 du roulé 222 et la seconde portion de liaison 223 en regard de la partie annulaire intérieure 22 ne sont pas thermoscellées l'une avec l'autre par le biais de ce matériau de thermoscellage (figure 4), puis
- une étape de chauffage au cours de laquelle, d'une part, la membrane pelable 3 est thermoscellée sur l'anneau métallique 2 par le biais de la bande de scellage 5 et, d'autre part, la première portion de liaison 2223 du roulé 222 (en l'occurrence ici sa portion supérieure 2224) est thermoscellée avec la seconde portion de liaison 223 en regard de la partie annulaire intérieure 22 par le biais du joint d'étanchéité 6 (figure 5).

### Etape de fourniture

L'étape de fourniture comprend avantageusement des opérations pour la fabrication de l'anneau métallique 2, indépendamment de la membrane pelable 3 et avant leur assemblage.

L'étape de fourniture de l'anneau métallique 2 comprend, préalablement à une opération de formation du roulé 222, une étape de revêtement au cours de laquelle le matériau de thermoscellage est déposé sur les faces annulaires de la partie annulaire intérieure 22, à savoir, au minimum :
- sur une partie de la face annulaire supérieure 2211 de la partie couronne 221, voire de préférence sur l'intégralité des faces annulaires supérieure et inférieure 2211, 2212 de la partie couronne 221,
- sur lesdites portions de liaison 2223 et 223, et
- sur les surfaces extérieure et intérieure 2221, 2222 du roulé 222.

Cette étape de fourniture de l'anneau métallique 2 comprend avantageusement les opérations suivantes :
- une opération de fourniture d'une plaque métallique (non représentée),
- une opération de découpe d'un flan 8 dans ladite plaque métallique (figure 4A),
- une opération d'emboutissage du flan 8 pour former la partie annulaire extérieure 21 (figures 4A à 4B),
- une étape de découpe d'une rondelle centrale 9 au sein du flan 8, au moyen d'un outil de découpe 10 (comprenant un outil de découpe supérieur 101 et un outil de découpe inférieur 102), pour former la partie annulaire intérieure 22 (figure 4C) avec la partie couronne 221,
- une opération de formage de la bordure annulaire intérieure de la partie annulaire intérieure 22, pour former un mur orienté du côté de la face annulaire inférieure 2212 de la partie couronne 221 (pour initier la formation du roulé 222 - figure 4D),
- une opération de formage du mur, pour former le roulé 222 en regard de sa face annulaire inférieure 2212 (figure 4E à figure 4G).

Préalablement à l'opération de formation du roulé 222, une opération de revêtement avec le matériau de thermoscellage est avantageusement mise en oeuvre. De préférence, cette opération est réalisée sur métal à plat avant toute mise en forme, comme expliqué ci-après.

Cette opération de revêtement consiste avantageusement à déposer le matériau de thermoscellage sur la pièce métallique destinée à former l'anneau métallique 2 (plaque, flan, etc.), cela sur deux faces 81, 82 opposées destinées à former les deux faces annulaires 2211, 2212 de la partie couronne 221 de la partie annulaire intérieure 22 et les surfaces extérieure 2221 et intérieure 2222 du roulé 222.

Cette opération de revêtement peut être effectuée :
- au moyen d'un vernis thermoscellant (contenant avantageusement du polypropylène), déposé sur la pièce métallique (par exemple par pulvérisation), ou
- à partir d'un métal pré-revêtu d'un film thermoscellant (contenant du polypropylène).

Le vernis thermoscellant peut être appliqué pleine feuille avant la mise en forme de l'anneau métallique 2 (avantageusement directement sur la plaque métallique ou sur le flan 8), ou localement en vernissage sélectif (« spot coating »), voire encore par pulvérisation.

Le vernis thermoscellant est avantageusement constitué d'une matrice polymère et d'une dispersion de polypropylène.

Avant la formation du roulé 222, l'anneau métallique 2 comporte ici deux couches C1, C2 du matériau de thermoscellage :
- une couche supérieure C1, recouvrant la face annulaire supérieure de la partie annulaire intérieure 22, et
- une couche inférieure C2, recouvrant la face annulaire inférieure de la partie annulaire intérieure 22.

Lors de la formation du roulé 222, les deux couches C1, C2 du matériau de thermoscellage sont amenées en regard l'une de l'autre au niveau de l'espace annulaire 224 (figure 4G).

A l'issue de l'étape de fourniture (figure 4G), l'anneau métallique 2 comporte ainsi toujours deux couches C1, C2 du matériau de thermoscellage :
- une couche supérieure C1, recouvrant la face annulaire supérieure 2211 de la partie couronne 221 de la partie annulaire intérieure 22 et la surface extérieure 2221 du roulé 222, et
- une couche inférieure C2, recouvrant la face annulaire inférieure 2212 de la partie couronne 221 de la partie annulaire intérieure 22 et la surface intérieure 2222 du roulé 222.

Au niveau de ce roulé 222, la première portion de liaison 2223 (ici au niveau de sa portion supérieure 2224) est ménagée au regard de la seconde portion de liaison 223 de la partie annulaire intérieure 22, délimitant entre elles l'espace annulaire 224.

Cet espace annulaire 224 est au moins partiellement rempli par le matériau de thermoscellage.

En l'espèce, ce remplissage est réalisé par deux portions de couches distinctes :
- une première portion C11 de la couche supérieure C1, recouvrant la première portion de liaison 2223 du roulé 222, et
- une seconde portion C21 de la couche inférieure C2, en regard de ladite première portion C11, recouvrant la seconde portion de liaison 223 de la partie annulaire intérieure 22 (située sur la face annulaire inférieure 2212 de la partie couronne 221 ou sur le début de la surface intérieure 2222 du roulé 222.

En l'état, les deux portions C11, C21 sont en regard (voire attenantes ou en contact) au sein de l'espace annulaire 224, tout en restant distinctes l'une par rapport à l'autre.

La première portion de liaison 2223 du roulé 222 et la seconde portion de liaison 223 en regard de la partie annulaire intérieure 22 ne sont ainsi pas thermoscellées l'une avec l'autre par le biais de ce matériau de thermoscellage.

L'étape de chauffage est quant à elle décrite plus en détails ci-dessous en relation avec la figure 5.

En l'espèce, à partir de cet anneau métallique 2, les scellages de la membrane pelable 3 et de l'espace annulaire 224 sont réalisés grâce au matériau de thermoscellage convenablement réparti sur l'anneau métallique, qui est activé par des actions combinées de chaleur et de pression.

Ce thermoscellage est avantageusement réalisé au moyen d'un outil de thermoscellage 11, par exemple une mâchoire de thermoscellage qui, une fois l'anneau métallique 2 et la membrane pelable 3 correctement disposés l'un par rapport à l'autre, vient appliquer une pression et un chauffage.

Le chauffage est avantageusement réalisé depuis la surface supérieure 31 de la membrane pelable 3, pour générer la bande de scellage 5 et le joint d'étanchéité 6 par le biais d'un phénomène de conduction ou d'induction thermique.

Cette étape de chauffage est ici mise en oeuvre par le biais d'un outil de thermoscellage 11, par exemple par induction, comprenant deux organes d'appui (ou « mors »), chacun en une ou plusieurs parties :
- un mors supérieur 111, chauffant, et
- un mors inférieur 112 (de préférence également chauffant), pour assurer une contre-pression.

En l'espèce, le mors supérieur 111 est adapté à appuyer sur la membrane pelable 3, cela en direction de la face annulaire supérieure 2211 de la partie couronne 221 de la partie annulaire intérieure 22, y compris sur une zone annulaire intérieure située en regard du roulé 222.

De son côté, le mors inférieur 112 comporte une surface active composée de deux portions d'appui :
- une portion d'appui extérieure 1121, qui vient exercer une force d'appui contre la face annulaire inférieure 2212 de la partie couronne 221 de la partie annulaire intérieure 22, et
- une portion d'appui intérieure 1122, déportée verticalement, qui vient exercer une force d'appui contre la portion inférieure 2225 du roulé 222, cette force d'appui étant dirigée également vers la partie couronne 221.

En pratique, la pression et le chauffage exercés par les mors supérieur 111 et inférieur 112 permettent un chauffage qui est apte à générer, en même temps, la bande de scellage 5 et le joint d'étanchéité 6.

En effet, la chaleur provenant des deux mors 111 et 112 diffuse au travers de la membrane pelable 3 et de la partie annulaire intérieure 22 de l'anneau métallique 2, de manière à provoquer le scellage des deux portions C11, C21 en regard du matériau de thermoscellage présent au sein de l'espace annulaire 224.

En particulier, ces deux portions C11, C21 en regard du matériau de thermoscellage fusionnent entre elles pour former le joint d'étanchéité 6.

La première portion de liaison 2223 du roulé 222 et la seconde portion de liaison 223 en regard de la partie annulaire intérieure 22 sont ainsi scellées l'une avec l'autre par le biais du joint d'étanchéité 6 qui obture l'espace annulaire 224 (figure 3).

Lors de ce thermoscellage, l'appui exercé par le mors inférieur 112 (et en particulier la portion d'appui intérieure 1122) permet un placage (ou au moins un rapprochement) de la portion supérieure 2224 du roulé 222 contre (en direction) de la face annulaire inférieure 2212 de la partie couronne 221 de la partie annulaire intérieure 22.

Ce phénomène contribue à réduire la largeur de l'espace annulaire 224, et il permet de mettre en contact intime les matériaux thermoscellants pour obtenir un joint d'étanchéité efficace.

Le couvercle 1 ainsi obtenu peut ensuite être assemblé sur le corps de boîte C, cela par le biais d'une procédure d'assemblage classique en soi (par exemple par sertissage).

### Variante de réalisation :

La figure 6 est une vue schématique, en coupe, d'une seconde forme de réalisation du couvercle selon l'invention.

Sur cette figure 6, les parties structurelles identiques ou similaires au mode de réalisation décrit précédemment conservent les mêmes repères pour faciliter la compréhension.

On retrouve, sur la figure 6, l'anneau métallique 2 qui comprend :
- une partie annulaire extérieure 21, adaptée à être solidarisée sur une bordure libre de la paroi latérale d'un corps de boîte, par exemple par sertissage, et
- une partie annulaire intérieure 22, sur laquelle la membrane pelable 3 est scellée par thermoscellage.

Dans cette variante de réalisation, le roulé 222 est formé par un enroulement dit « extérieur » (c'est-à-dire enroulé vers l'extérieur de la boite de conserve).

Dans ce cas, le roulé 222 comporte :
- une surface extérieure 2221 s'étendant dans le prolongement de la face annulaire inférieure 2212 de la partie couronne 221,
- une surface intérieure 2222 s'étendant dans le prolongement de la face annulaire supérieure 2211 de la partie couronne 221, et
- un bord libre 2226 ménagé au sein dudit roulé 222.

Toujours dans ce cas, la première portion de liaison 2223 du roulé 222 vient en regard de la seconde portion de liaison 223 de la partie annulaire intérieure 22 qui est ici ménagée dans le prolongement de la face annulaire supérieure 2211 de la partie couronne 221.

La première portion de liaison 2223 du roulé 222 est ménagée ici sur le côté extérieur dudit roulé 222.

Et la seconde portion de liaison 223 de ladite partie annulaire intérieure 22 est formée ici par un mur 225 (ou une jupe) orienté du côté de la face annulaire inférieure 2212 de la partie couronne 221.

Encore dans ce cas, la surface extérieure 2221 du roulé 222 (en particulier sa portion supérieure) s'étend avantageusement à distance de la membrane pelable 3 en regard (figure 6). Il n'y a donc ainsi avantageusement pas de thermoscellage entre le roulé 222 et la membrane pelable 3.

Pour cela, la hauteur de la seconde portion de liaison 223 de ladite partie annulaire intérieure 22 (en l'espèce le mur 225) est avantageusement supérieure par rapport à la hauteur du roulé 222.

On retrouve également :
- une couche supérieure C1 de matériau de thermoscellage recouvrant la face annulaire supérieure 2211 de la partie couronne 221 de la partie annulaire intérieure 22 et la surface intérieure 2222 du roulé 222, et
- une couche inférieure C2, recouvrant la face annulaire inférieure 2212 de la partie couronne 221 de la partie annulaire intérieure 22 et la surface extérieure 2221 du roulé 222.

On retrouve encore la première portion de liaison 2223 du roulé 222 et la seconde portion de liaison 223 de la partie annulaire intérieure 22 en regard qui sont scellées l'une avec l'autre par le biais d'un matériau de thermoscellage, pour former un joint d'étanchéité 6 obturant l'espace annulaire 224.

Là encore, dans cette variante de réalisation, la face annulaire supérieure 2211 de la partie couronne 221, et les surfaces 2221, 2222 du roulé 222, sont recouvertes par le matériau de thermoscellage.

A part l'orientation du roulé 222, une telle variante de couvercle peut être obtenue selon un procédé de fabrication identique (ou similaire) à celui décrit ci-dessus en relation avec les figures 1 à 5.

Tel qu'illustré sur la figure 6, les mors supérieur 111 et inférieur 112 sont conformés pour obtenir un placage optimal des différentes surfaces à thermosceller, les unes contre les autres.

De plus, le mors inférieur 112 est avantageusement adapté à chauffer deux zones de l'anneau métallique 2, à savoir :
- la partie annulaire intérieure 22 (en particulier sa partie couronne 221), pour assurer le scellage par thermoscellage de la membrane pelable 3, et
- la surface extérieure 2221 du roulé 222, de sorte que les deux couches C1, C2 en regard du matériau de thermoscellage fusionnent entre elles pour former le joint d'étanchéité 6.

Là encore, ce joint d'étanchéité 6 empêche ainsi les échanges entre l'intérieur du roulé 222 (où se trouve son bord libre 2226) et l'environnement ambiant, au travers de l'espace annulaire 224.

En particulier, là encore, ce joint d'étanchéité 6 est destiné à empêcher l'entrée du produit conditionné dans le roulé 222, de sorte à éviter les réactions chimiques de son bord libre 2226 avec ce produit conditionné (par exemple corrosion et/ou sulfuration).

## Revendications

1. Couvercle adapté à la fermeture d'une boîte de conserve métallique, lequel couvercle comprend un anneau métallique (2) sur lequel une membrane pelable (3) est scellée,
lequel anneau métallique (2) comprend :
- une partie annulaire extérieure (21) adaptée à être solidarisée sur une bordure de la paroi latérale d'un corps de boîte, et
- une partie annulaire intérieure (22), sur laquelle ladite membrane pelable (3) est scellée,
laquelle partie annulaire intérieure (22) comporte une partie couronne (221) prolongée par un roulé (222) délimitant une lumière centrale (4),
laquelle partie couronne (221) comporte :
- une face annulaire supérieure (2211) sur laquelle ladite membrane pelable (3) est scellée par le biais d'une bande de scellage (5) réalisée dans un matériau de thermoscellage, et
- une face annulaire inférieure (2212), opposée à ladite face annulaire supérieure (2211),
lequel roulé (222) est formé du côté de la face annulaire inférieure (2212) de ladite partie couronne (221),
lequel roulé (222) comporte :
- une surface extérieure (2221) et une surface intérieure (2222) s'étendant dans le prolongement des faces annulaires supérieure (2211) et inférieure (2212) de ladite partie couronne (221), et
- un bord libre (2226) ménagé au sein dudit roulé (222),
laquelle surface extérieure (2221) dudit roulé (222) comporte une première portion de liaison (2223) qui est ménagée en regard et à proximité d'une seconde portion de liaison (223) de ladite partie annulaire intérieure (22), délimitant entre elles un espace annulaire (224),
**caractérisé en ce que** la surface extérieure (2221) et la surface intérieure (2222) dudit roulé (222) sont recouvertes par un matériau de thermoscellage,
et **en ce que** ladite première portion de liaison (2223) et ladite seconde portion de liaison (223) sont scellées l'une avec l'autre par le biais dudit matériau de thermoscellage, pour former un joint d'étanchéité (6) obturant ledit espace annulaire (224).

2. Couvercle selon la revendication 1, **caractérisé en ce que** la face annulaire supérieure (2211) et la face annulaire inférieure (2212) de la partie couronne (221), ainsi que la surface extérieure (2221) et la surface intérieure (2222) du roulé (222), sont recouvertes par ledit matériau de thermoscellage.

3. Couvercle selon l'une quelconque des revendication 1 ou 2, **caractérisé en ce que** le roulé (222) est formé par un enroulement dit « intérieur », de sorte que ladite première portion de liaison (2223) dudit roulé (222) soit en regard de ladite seconde portion de liaison (223) de ladite partie annulaire intérieure (22) qui est ménagée dans le prolongement de ladite face annulaire inférieure (2212) de la partie couronne (221).

4. Couvercle selon l'une quelconque des revendication 1 ou 2, **caractérisé en ce que** le roulé (222) est formé par un enroulement dit « extérieur », de sorte que ladite première portion de liaison (2223) dudit roulé (222) soit en regard de ladite seconde portion de liaison (223) de ladite partie annulaire intérieure (22) qui est ménagée dans le prolongement de ladite face annulaire supérieure (2211) de la partie couronne (221).

5. Couvercle selon l'une quelconque des revendications 1 à 4, **caractérisé en ce que** le matériau de thermoscellage est choisi parmi le polypropylène et le polyéthylène.

6. Boîte de conserve métallique, comprenant :
- un corps de boîte (C) comportant une paroi latérale (L) terminée par une bordure (L1), et
- un couvercle (1) selon l'une quelconque des revendications 1 à 5, serti sur ladite bordure (L1) de ladite paroi latérale (L).

7. Procédé pour la fabrication d'un couvercle (1) selon l'une quelconque des revendications 1 à 5, **caractérisé en ce qu'**il comprend successivement :
a) une étape de fourniture d'un anneau métallique (2),
lequel anneau métallique (2) comprend :
- une partie annulaire extérieure (21) adaptée à être solidarisée sur une bordure de la paroi latérale d'un corps de boîte, et
- une partie annulaire intérieure (22), sur laquelle ladite membrane pelable (3) est destinée à être scellée,
laquelle partie annulaire intérieure (22) comporte une partie couronne (221) prolongée par un roulé (222) délimitant une lumière centrale (4),
laquelle partie couronne (221) comporte :
- une face annulaire supérieure (2211) sur laquelle ladite membrane pelable (3) est destinée à être scellée par le biais d'une bande de scellage (5) réalisée dans un matériau de thermoscellage, et
- une face annulaire inférieure (2212), opposée à ladite face annulaire supérieure (2211),
lequel roulé (222) est formé du côté de la face annulaire inférieure (2212) de ladite partie couronne (221),
lequel roulé (222) comporte :
- une surface extérieure (2221) et une surface intérieure (2222) s'étendant dans le prolongement des faces annulaires supérieure (2211) et inférieure (2212) de ladite partie couronne (221), et
- un bord libre (2226) ménagé au sein dudit roulé (222),
laquelle surface extérieure (2221) dudit roulé (222) comporte une première portion de liaison (2223) qui est ménagée en regard et à proximité d'une seconde portion de liaison (223) de ladite partie annulaire intérieure (22), délimitant entre elles un espace annulaire (224),
lequel espace annulaire (224) est au moins partiellement rempli par un matériau de thermoscellage et dans lequel la première portion de liaison (2223) dudit roulé (222) et la seconde portion de liaison (223) en regard de la partie annulaire intérieure (22) ne sont pas scellées l'une avec l'autre par le biais dudit matériau de thermoscellage, et
b) une étape de chauffage au cours de laquelle, d'une part, la membrane pelable (3) est thermoscellée sur ledit anneau métallique (2) par le biais de la bande de scellage (5) et, d'autre part, la première portion de liaison (2223) du roulé (222) est scellée avec la seconde portion de liaison (223) en regard de la partie annulaire intérieure (22) par le biais du joint d'étanchéité (6).

8. Procédé selon la revendication 7, **caractérisé en ce que** l'étape de fourniture de l'anneau métallique (2) comprend, préalablement à une opération de formation du roulé (222), une opération de revêtement au cours de laquelle le matériau de thermoscellage est déposé sur l'anneau métallique (2).

9. Procédé selon la revendication 8, **caractérisé en ce que** l'opération de revêtement est effectuée au moyen d'un vernis thermoscellant ou à partir d'un métal pré-revêtu d'un film thermoscellant.

10. Procédé selon l'une quelconque des revendications 7 à 9, **caractérisé en ce que**, au cours de l'étape de chauffage, le chauffage est réalisé depuis une surface supérieure (31) de la membrane pelable (3) pour générer la bande de scellage (5) et le joint d'étanchéité (6).

11. Procédé selon la revendication 10, **caractérisé en ce que** l'étape de chauffage est mise en oeuvre par le biais d'un outil de thermoscellage (11) comprenant un mors supérieur (111) chauffant, venant appuyer et chauffer en regard la face annulaire supérieure (2211), y compris sur une zone annulaire en regard du roulé (222), pour générer la bande de scellage (5) et le joint d'étanchéité (6).

12. Procédé selon l'une quelconque des revendications 7 à 11, **caractérisé en ce que**, au cours de l'étape de chauffage et dans le cas d'un enroulement « intérieur », une force d'appui est exercée sur une portion inférieure (2225) du roulé (222) de sorte à plaquer l'une contre l'autre la première portion de liaison (2223) dudit roulé (222) et la seconde portion de liaison (223) de la partie annulaire intérieure (22) en regard.

13. Procédé selon la revendication 12, **caractérisé en ce que** l'étape de chauffage est mise en oeuvre par le biais d'un outil de thermoscellage (11) comprenant un organe inférieur d'appui (112), venant exercer une force d'appui contre une portion inférieure (2225) du roulé (222) et dirigée vers la partie annulaire intérieure (22).

## Patentansprüche

1. Deckel, der für das Verschließen einer metallenen Konservenbüchse ausgelegt ist, wobei der Deckel einen Metallring (2) aufweist, auf dem eine abziehbare Membran (3) aufgesiegelt ist,
wobei der Metallring (2)
- einen äußeren ringförmigen Teil (21), der dazu ausgelegt ist, auf einem Rand der Seitenwand eines Büchsenkörpers befestigt zu werden, und
- einen inneren ringförmigen Teil (22), auf dem die abziehbare Membran (3)
aufgesiegelt ist,
aufweist,
wobei der innere ringförmige Teil (22) einen Scheitelteil (221) aufweist, der durch einen eine mittige Öffnung (4) begrenzenden Wickel (222) verlängert ist,
wobei der Scheitelteil (221)
- eine ringförmige Oberseite (2211), auf der die abziehbare Membran (3) mittels eines aus einem Heißversiegelungstiiaterial gefertigten Versiegelungsbands (5) aufgesiegelt ist, und
- eine von der ringförmigen Oberseite (2211) abgewandte ringförmige Unterseite (2212)
aufweist,
wobei der Wickel (222) auf der Seite der ringförmigen Unterseite (2212) des Scheitelteils (221) ausgebildet ist,
wobei der Wickel (222)
- eine äußere Oberfläche (2221) und eine innere Oberfläche (2222) aufweist, die sich in Verlängerung der ringförmigen Oberseite (2211) beziehungsweise Unterseite (2212) des Scheitelteils (221) erstrecken, und
- einen an dem Wickel (222) eingerichteten freien Rand (2226) aufweist,
wobei die äußere Oberfläche (2221) des Wickels (222) einen ersten Verbindungsabschnitt (2223) aufweist, der gegenüber und in der Nähe eines zweiten Verbindungsabschnitts (223) des inneren ringförmigen Teils (22) eingerichtet ist und dazwischen einen ringförmigen Raum (224) abgrenzt,
**dadurch gekennzeichnet, daß** die äußere Oberfläche (2221) und die innere Oberfläche (2222) des Wickels (222) mit einem Heißversiegelungsmaterial bedeckt sind
und daß der erste Verbindungsabschnitt (2223) und der zweite Verbindungsabschnitt (223) mittels des Heißversiegelungsmaterials miteinander versiegelt sind, um einen Dichtring (6) zu bilden, der den ringförmigen Raum (224) verschließt.

2. Deckel gemäß Anspruch 1, **dadurch gekennzeichnet, daß** die ringförmige Oberseite (2211) und die ringförmige Unterseite (2212) des Scheitelteils (221) sowie die äußere Oberfläche (2221) und die innere Oberfläche (2222) des Wickels (222) mit dem Heißversiegelungsmaterial bedeckt sind.

3. Deckel gemäß einem der Ansprüche 1 oder 2, **dadurch gekennzeichnet, daß** der Wickel (222) durch ein so genanntes "inneres" Aufwickeln gebildet ist, so daß der erste Verbindungsabschnitt (2223) des Wickels (222) gegenüber dem zweiten Verbindungsabschnitt (223) des inneren ringförmigen Teils (22) ist, der in Verlängerung der ringförmigen Unterseite (2212) des Scheitelteils (221) eingerichtet ist.

4. Deckel gemäß einem der Ansprüche 1 oder 2, **dadurch gekennzeichnet, daß** der Wickel (222) durch ein so genanntes "äußeres" Aufwickeln gebildet ist, so daß der erste Verbindungsabschnitt (2223) des Wickels (222) gegenüber dem zweiten Verbindungsabschnitt (223) des inneren ringförmigen Teils (22) ist, der in Verlängerung der ringförmigen Oberseite (2211) des Scheitelteils (221) eingerichtet ist.

5. Deckel gemäß einem der Ansprüche 1 bis 4, **dadurch gekennzeichnet, daß** das Heißversiegelungsmaterial aus dem Polypropylen und dem Polyäthylen ausgewählt ist.

6. Konservenbüchse aus Metall, die
- einen Büchsenkörper (C), der eine Seitenwand (L), die mit einem Rand (L1) abgeschlossen ist, und
- einen Deckel (1) gemäß einem der Ansprüche 1 bis 5, der auf den Rand (L1) der Seitenwand (L) aufgebördelt ist, aufweist.

7. Verfahren für die Herstellung eines Deckels (1) gemäß einem der Ansprüche 1 bis 5, **dadurch gekennzeichnet, daß** es aufeinanderfolgend
a) einen Schritt des Bereitstellens eines Metallrings (2),
wobei der Metallring (2)
- einen äußeren ringförmigen Teil (21), der dazu ausgelegt ist, auf einem Rand der Seitenwand eines Büchsenkörpers befestigt zu werden, und
- einen inneren ringförmigen Teil (22), auf den die abziehbare Membran (3) aufgesiegelt werden soll,
aufweist,
wobei der innere ringförmige Teil (22) einen Scheitelteil (221) aufweist, der durch einen eine mittige Öffnung (4) begrenzenden Wickel (222) verlängert ist,
wobei der Scheitelteil (221)
- eine ringförmige Oberseite (2211), auf der die abziehbare Membran (3) mittels eines aus einem Heißversiegelungsmaterial gefertigten Versiegelungsbands (5) aufgesiegelt werden soll, und
- eine von der ringförmigen Oberseite (2211) abgewandte ringförmige Unterseite (2212)
aufweist,
wobei der Wickel (222) auf der Seite der ringförmigen Unterseite (2212) des Scheitelteils (221) ausgebildet ist,
wobei der Wickel (222)
- eine äußere Oberfläche (2221) und eine innere Oberfläche (2222) aufweist, die sich in Verlängerung der ringförmigen Oberseite (2211) beziehungsweise Unterseite (2212) des Scheitelteils (221) erstrecken, und
- einen an dem Wickel (222) eingerichteten freien Rand (2226) aufweist,
wobei die äußere Oberfläche (2221) des Wickels (222) einen ersten Verbindungsabschnitt (2223) aufweist, der gegenüber und in der Nähe eines zweiten Verbindungsabschnitts (223) des inneren ringförmigen Teils (22) eingerichtet ist und dazwischen einen ringförmigen Raum (224) abgrenzt,
wobei der ringförmige Raum (224) wenigstens teilweise mit einem Heißversiegelungsmaterial gefüllt ist und wobei der erste Verbindungsabschnitt (2223) des Wickels (222) und der gegenüber dem inneren ringförmigen Teil (22) eingerichtete zweite Verbindungsabschnitt (223) nicht mittels des Heißversiegelungsmaterials miteinander versiegelt sind, und
b) einen Schritt des Erhitzens, während dessen einerseits die abziehbare Membran (3) mittels des Versiegelungsbands (5) auf den Metallring (2) aufgesiegelt wird und andererseits der erste Verbindungsabschnitt (2223) des Wickels (222) mittels des Dichtrings (6) mit dem gegenüber dem inneren ringförmigen Teil (22) liegenden zweiten Verbindungsabschnitt (223) heißversiegelt wird, aufweist.

8. Verfahren gemäß Anspruch 7, **dadurch gekennzeichnet, daß** der Schritt des Bereitstellens des Metallrings (2) vor einem Vorgang des Bildens des Wickels (222) einen Vorgang des Beschichtens aufweist, im Verlaufe dessen das Heißversiegelungsmaterial auf den Metallring (2) aufgebracht wird.

9. Verfahren gemäß Anspruch 8, **dadurch gekennzeichnet, daß** der Vorgang des Beschichtens mit einem Heißversiegelungslack oder von einem mit einem Heißversiegelungsfilm vorbeschichteten Metall ausgehend durchgeführt wird.

10. Verfahren gemäß einem der Ansprüche 7 bis 9, **dadurch gekennzeichnet, daß** beim Schritt des Erhitzens das Erhitzen von einer oberen Oberfläche (31) der abziehbaren Membran (3) aus erfolgt, um das Versiegelungsband (5) und den Dichtring (6) zu erzeugen.

11. Verfahren gemäß Anspruch 10, **dadurch gekennzeichnet, daß** der Schritt des Erhitzens mittels eines eine obere Heizbacke (111) aufweisenden Heißversiegelungswerkzeugs (11) durchgeführt wird, das von vorne auf die ringförmige Oberseite (2211) einschließlich einer ringförmigen Zone gegenüber dem Wickel (222) drückt und diese erhitzt, um das Heißversiegelungsband (5) und den Dichtring (6) zu erzeugen.

12. Verfahren gemäß einem der Ansprüche 7 bis 11, **dadurch gekennzeichnet, daß** beim Schritt des Erhitzens und im Fall eines "inneren" Aufwickelns auf einen unteren Abschnitt (2225) des Wickels (222) eine Druckkraft so ausgeübt wird, daß der erste Verbindungsabschnitt (2223) des Wickels (222) und der zweite Verbindungsabschnitt (223) des gegenüberliegenden inneren ringförmigen Teils (22) gegeneinandergedrückt werden.

13. Verfahren gemäß Anspruch 12, **dadurch gekennzeichnet, daß** der Schritt des Erhitzens mittels eines Heißversiegelungswerkzeugs (11) durchgeführt wird, das ein unteres Andruckorgan (112) aufweist, das eine auf den inneren ringförmigen Teil (22) gerichtete Andruckkraft auf einen unteren Abschnitt (2225) des Wickels (222) ausübt.

## Claims

1. A lid suitable for closing a metal can, wherein the lid comprises a metal ring (2) to which a peelable membrane (3) is sealed,
wherein the metal ring (2) comprises:
- an outer annular part (21) adapted to be fastened to an edge of the lateral wall of a can body, and
- an inner annular part (22), to which said peelable membrane (3) is sealed,
wherein the inner annular part (22) includes a crown part (221) extended by a curl (222) delimiting a central aperture (4),
wherein the crown part (221) includes:
- an upper annular face (2211) to which said peelable membrane (3) is sealed by means of a sealing strip (5) made of a heat-seal material, and
- a lower annular face (2212), opposed to said upper annular face (2211),
wherein the curl (222) is formed on the side of the lower annular face (2212) of said crown part (221),
wherein the curl (222) includes:
- an outer surface (2221) and an inner surface (2222) extending in continuation of the upper (2211) and lower (2212) annular faces of said crown part (221), and
- a free edge (2226) arranged within said curl (222),
wherein the outer surface (2221) of said curl (222) includes a first connection portion (2223) that is arranged opposite and near a second connection portion (223) of said inner annular part (22), delimiting an annular space (224) between each other,
**characterized in that** the outer surface (2221) and the inner surface (2222) of said curl (222) are covered with a heat-seal material,
and **in that** said first connection portion (2223) and said second connection portion (223) are sealed to each other by means of said heat-seal material, to form a sealing gasket (6) closing said annular space (224).

2. The lid according to claim 1, **characterized in that** the upper annular face (2211) and the lower annular face (2212) of the crown part (221), as well as the outer surface (2221) and inner surface (2222) of the curl (222), are covered with said heat-seal material.

3. The lid according to any one of claim 1 or 2, **characterized in that** the curl (222) is formed by a so-called "inward" rolling, so that said first connection portion (2223) of said curl (222) is opposite said second connection portion (223) of said inner annular part (22) that is arranged in the continuation of said lower annular face (2212) of the crown part (221).

4. The lid according to any one of claim 1 or 2, **characterized in that** the curl (222) is formed by a so-called "outward" rolling, so that said first connection portion (2223) of said curl (222) is opposite said second connection portion (223) of said inner annular part (22) that is arranged in the continuation of said upper annular face (2211) of the crown part (221).

5. The lid according to any one of claims 1 to 4, **characterized in that** the heat-seal material is chosen among polypropylene and polyethylene.

6. A metal can, comprising:
- a can body (C) including a lateral wall (L) ended by an edge (L1), and
- a lid (1) according to any one of claims 1 to 5, crimped to said edge (L1) of said lateral wall (L).

7. A method for manufacturing a lid (1) according to any one of claims 1 to 5, **characterized in that** it comprises in succession:
a) a step of providing a metal ring (2),
wherein the metal ring (2) comprises:
- an outer annular part (21) adapted to be fastened to an edge of the lateral wall of a can, and
- an inner annular part (22), to which said peelable membrane (3) is intended to be sealed,
wherein said inner annular part (22) includes a crown part (221) extended by a curl (222) delimiting a central aperture (4),
wherein said crown part (221) includes:
- an upper annular face (2211) to which said peelable membrane (3) is intended to be sealed by means of a sealing strip (5) made of a heat-seal material, and
- a lower annular face (2212), opposed to said upper annular face (2211),
wherein said curl (222) is formed on the side of the lower annular face (2212) of said crown part (221),
wherein said curl (222) comprises:
- an outer surface (2221) and an inner surface (2222) extending in the continuation of the upper (2211) and lower (2212) annular faces of said crown part (221), and
- a free edge (2226) arranged within said curl (222),
wherein said outer surface (2221) of said curl (222) includes a first connection portion (2223) that is arranged opposite and near a second connection portion (223) of said inner annular part (22), delimiting an annular space (224) between each other,
wherein said annular space (224) is at least partially filled with a heat-seal material and wherein the first connection portion (2223) of said curl (222) and the second connection portion (223) opposite the inner annular part (22) being not sealed to each other by means of said heat-seal material, and
b) a heating step during which, on the one hand, the peelable membrane (3) is heat sealed to said metal ring (2) by means of the sealing strip (5), and on the other hand, the first connection portion (2223) of the curl (222) is sealed to the second connection portion (223) opposite the inner annular part (22) by means of the sealing gasket (6).

8. The method according to claim 7, **characterized in that** the step of providing the metal ring (2) comprises, previously to a step of forming the curl (222), a coating operation during which the heat-seal material is deposited on the metal ring (2).

9. The method according to claim 8, **characterized in that** the coating operation is performed by means of a heat-seal varnish or from a metal pre-coated with a heat-seal film.

10. The method according to any one of claims 7 to 9, **characterized in that**, during the heating step, the heating is performed from an upper surface (31) of the peelable membrane (3) to generate the sealing strip (5) and the sealing gasket (6).

11. The method according to claim 10, **characterized in that** the heating step is implemented by means of a heat-seal tool (11) comprising an upper heating jaw (111), clamping and heating the opposite upper annular face (2211), including an opposite annular area of the curl (222), to generate the sealing strip (5) and the sealing gasket (6).

12. The method according to any one of claims 7 to 11, **characterized in that**, during the heating step, and in the case of an "inward" rolling, a clamping force is exerted on a lower portion (2225) of the curl (222) so as to get in touch the first connection portion (2223) of said curl (222) and the second connection portion (223) of the opposite inner annular part (22) against each other.

13. The method according to claim 12, **characterized in that** the heating step is implemented by means of a heat-seal tool (11) comprising a lower clamping member (112), exerting a clamping force against a lower portion (2225) of the curl (222) and directed towards the inner annular part (22).
